# NEUE EUROPÄISCHE PATENTSCHRIFT

(11) **EP 0 385 061 B2**
(45) Veröffentlichungstag und Bekanntmachung des Hinweises auf die Entscheidung über den Einspruch: **05.03.1997**
(45) Hinweis auf die Patenterteilung: 02.03.1994
(21) Anmeldenummer: 90100266.7
(22) Anmeldetag: 08.01.1990
(51) Int. Cl.: G01L 5/04, G01L 5/10, D03D 49/04, D03D 49/12

(54) **Vorrichtung an einer Webmaschine, zur Messung der Kettspannung**
Device as part of a weaver machine for measuring warp tension
Dispositif de machine à tisser, pour la mesure de la tension de châine

(30) Priorität: 25.02.1989 DE 3905881
(43) Veröffentlichungstag der Anmeldung: 05.09.1990
(73) Patentinhaber: LINDAUER DORNIER GESELLSCHAFT M.B.H, D-88131 Lindau (DE)
(72) Erfinder: Gielen, Markus, Dipl.-Ing. (FH), D-8995 Sigmarszell (DE)
(74) Vertreter: Riebling, Peter, Dr.-Ing., Patentanwalt

(56) Entgegenhaltungen:
- WO-A-87/00562
- DE-A- 2 940 527
- DE-A- 3 343 012
- DE-A- 3 724 829
- DE-B- 1 573 952
- DE-C- 251 905
- GB-A- 1 302 651
- JP-A-61 201 053
- US-A- 3 878 872

## Beschreibung

Die vorliegende Erfindung bezieht sich auf eine Vorrichtung an einer Webmaschine, zur Messung der Kettspannung, bei der entsprechend der Spannung der Kettfäden eine Meßeinrichtung mit Druck oder Kraft beaufschlagbar ist.

Derartige Vorrichtungen werden benötigt, um insbesondere in Verbindung mit einer Nachregelung der Kettspannung stets eine vorteilhafte Spannung der Kettfäden in Bezug auf das herzustellende Gewebe zu gewährleisten und insbesondere den Bruch von Kettfäden zu vermeiden.

Bei solchen Vorrichtungen ist es bereits aus der DE-A1 37 24 829 der Anmelderin bekannt, die Kettspannung durch eine Druckmessung zu ermitteln, wobei ein druckempfindlicher Schlauch quer zum Fadenverlauf der Kettfäden angeordnet ist und so zwischen den Fäden liegt, daß ein Teil der Kettfäden an der Oberseite über den druckempfindlichen Schlauch und ein Teil der Kettfäden an der Unterseite um den druckempfindlichen Schlauch herum umgelenkt wird. Ausgehend von der Spannung der Kettfäden wird der druckempfindliche Schlauch mit Druck beaufschlagt, der etwa proportional zur Kettfadenspannung ist. Der in dieser Weise ermittelte Druck der Kettfäden kann angezeigt werden oder in Verbindung mit der Meßeinrichtung wird eine stetige Regelung bzw. Nachführung der Spannung der Kettfäden vorgenommen.

Hierbei sind die ermittelten Druckverhältnisse jedoch nachteilig abhängig vom Umschlingungswinkel und im weiteren abhängig von der herrschenden Temperatur, so daß abgesehen von der möglichen Beeinträchtigung der Kettfäden die Spannung derselben nur relativ ungenau ermittelt werden kann.

Ein weiteres bekanntes Meßverfahren zur Messung der Kettfadenspannung bezieht sich darauf, die Kraft zu ermitteln, welche die Kettfäden auf den Streichbaum ausüben. Der Streichbaum dient in bekannter Weise als Umlenkmittel für die Kettfäden, welche hierbei - je nach Spannung - mit einer gewissen Druckkraft auf den Streichbaum einwirken.

Nachteilig hierbei ist das Meßverfahren ebenfalls vom Umschlingungswinkel der Kettfäden am Streichbaum abhängig, wobei sich dieser Umschlingungswinkel während des Webens dauernd ändert bedingt durch das Abweben der Kette vom Kettbaum. Hierbei kann ein beträchtlicher Meßfehler auftreten.

Eine weiterhin bekannte Vorrichtung zur Messung der Kettspannung besteht darin, daß ein oder mehrere Kettfäden in einer meanderförmigen Führung zwischen drei Meßrollen eingelegt wird. Hierbei wird dann der Druck auf die Meßrollen bzw. deren Auslenkung ermittelt. Nachteilig hierbei liegt bei diesem Meßverfahren eine erhöhte Reibung der Kettfäden innerhalb der Meßeinrichtung vor und weiterhin muß bei einem evtl. Bruch des Kettfadens dieser in aufwendiger Weise erneut in die Meßeinrichtung eingelegt werden.

Der vorliegenden Erfindung liegt deshalb die Aufgabe zugrunde, die eingangs genannte Vorrichtung so weiterzubilden, daß die Kettfadenspannung mit wesentlich größerer Genauigkeit unabhängig von Temperatureinflüssen und weitgehend unabhängig von einem Umschlingungswinkel betriebssicher gemessen werden kann.

Die Lösung der gestellten Aufgabe ist im Anspruch 1 angegeben.

Wesentlich bei der vorliegenden Erfindung ist demnach, daß unterschiedlich zu Messungen, die sonst direkt im Kettfadenbereich durchgeführt werden, nun die Messung mit der Meßeinrichtung im Bereich des fertigen Gewebes erfolgt und zwar im Gewebeverlauf hinter dem Bindepunkt nach dem Blattanschlag. Durch diese Anordnung der Meßeinrichtung kann unmittelbar auch die Kettfadenspannung ermittelt werden, weil die Gewebespannung in diesem Bereich unmittelbar proportional zur Kettfadenspannung verläuft, so daß mit dieser Anordnung der Meßvorrichtung ohne Beeinträchtigung der Kettfäden eine wesentlich genauere Messung der Kettfadenspannung möglich ist.

Die Messung der Gewebespannung ist weiterhin unabhängig vom Umschlingungswinkel am Streichbaum, der sonst etwa bei der Kräfteerfassung am Streichbaum eine wesentliche Rolle spielte und das Meßergebnis verfälschen konnte.

Die Anordnung und die erfindungsgemässe Meßvorrichtung selbst ist hierbei relativ unabhängig von Temperatureinflüssen.

Zudem besteht der weitere Vorteil, daß die erfindungsgemässe Meßeinrichtung in der Anordnung jenseits des Bindespunktes am Gewebe den Webverlauf und die Bedienung vonseiten des Webers nicht störend beeinflusst.

Im weiteren zeichnet sich die erfindungsgemässe Meßvorrichtung dadurch aus, daß nun sonst störende Reibeinflüsse, insbesondere bei empfindlichen Geweben, vermieden werden. Die erfindungsgemässe Vorrichtung kann vielmehr selbst zur ohnehin nötigen Umlenkung des Gewebes auf einen Warenbaum verwendet werden, so daß in diesem Bereich des Gewebes keine zusätzlichen Umlenkrollen oder andere Umlenkmittel benötigt werden.

Weiterhin kann die erfindungsgemässe Meßvorrichtung fest am Webstuhl eingebaut werden, wodurch die Gefahr der Beschädigung der Meßeinrichtung weitgehend vermieden wird.

In einer Weiterbildung wird es noch vorgezogen, wenn die Kanten dieses Messbalkens, die nächst dem nutenförmigen Einschnitt des zylinderförmigen Rohres liegen, etwas nach unten gezogen sind, d.h. sie liegen unterhalb der Oberkante dieses zylindrischen Rohres. Hierbei ist es dann vorgesehen, daß der Mittelteil dieses Messbalkens etwa gleich hoch in der Mantellinie dieses zylinderförmigen Rohres liegt. Hierdurch wird gewährleistet, daß der Messbalken lediglich an einem einzigen Punkt, nämlich im Bereich seiner gesamten Mittellinie trägt. Selbstverständlich ist die Mittellinie nur als Ideale zu sehen, in Wirklichkeit gibt es einen bestimmten Umschlingungswinkel, d. h. das über den Messbalken laufende Gewebe wird also bevorzugt von dem Mittelteil des Messbalkens getragen, während die äußeren Teile des Messbalkens nicht mehr vom Gewebe mit Druck beaufschlagt werden.

Nach einer bevorzugten Ausführungsform hat der Messbalken hier eine Länge von etwa 150 mm, weil es hierzu standardisierte Kraftmessaufnehmer gibt.

In Abhängigkeit von der Gewebedichte laufen dann über einen derartigen Messbalken etwa zwischen 30 und 1.000 gebundene Kettfäden.

Selbstverständlich sind auch andere Längen für einen derartigen Messbalken möglich.

Verwendet man eine größere Länge des Messbalkens, dann ist es relativ schwierig diesen Messbalken steif genug auszuführen, um die über die Länge entstehende Kraft auf die Dehnungsmesstreifen einzuleiten.

Verwendet man einen kürzeren Messbalken, sind die auf den Messbalken wirkenden Kräfte geringer und damit die Anordnung unempfindlicher und es wird keine repräsentative Messung für die Gewebespannung insgesamt erreicht.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Die Erfindung wird nun anhand eines Ausführungsbeispieles näher erläutert.
- Figur 1: zeigt schematisiert die Gewebebildung an einem Webstuhl;
- Figur 2: zeigt einen Schnitt durch die erfindungsgemäße Messvorrichtung;
- Figur 3: zeigt einen Schnitt in Richtung der Linie III/III in Figur 2;
- Figur 4: zeigt schematisiert im Schnitt und vergrößerter Darstellung den oberen Teil der Messvorrichtung.

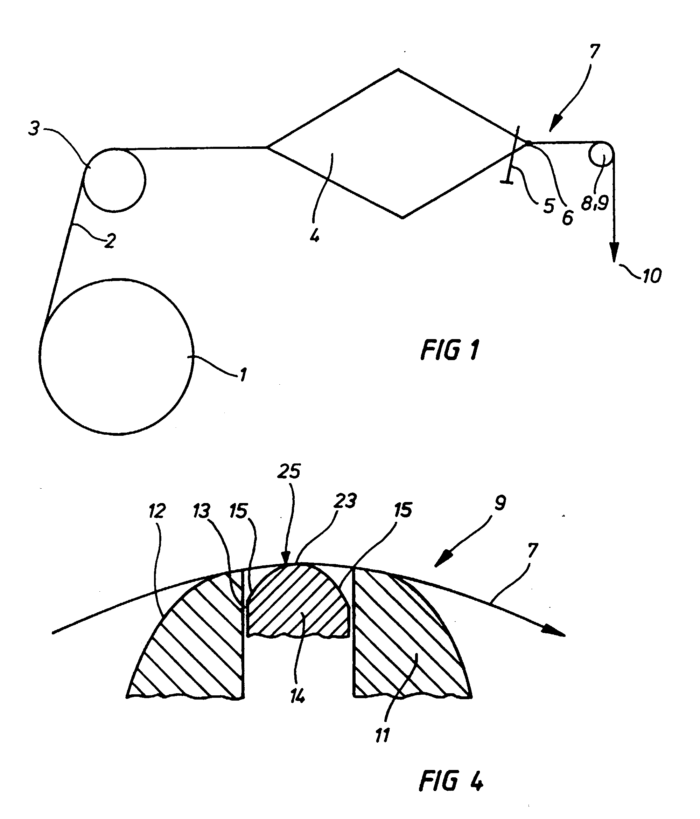

In Fig. 1 ist dargestellt, wie von einem Kettbaum 1 die Kette 2 abgewebt wird und hierbei über einen Streichbaum 3 umgelenkt wird.

In an sich bekannter Weise erfolgt dann die Fachbildung, wobei im Fach 4 das Blatt 5 angeordnet ist, so daß das hierdurch verarbeitete Gewebe im Bindepunkt 6 gebildet wird.

Das nach dem Bindepunkt 6 fertiggestellte Gewebe 7 wird dann über eine Ausbreitwelle 8 abgezogen und einer nicht näher dargestellten Gewebeeinzugsvorrichtung 10 zugeführt.

Erfindungsgemäß ist nun in der Ausbreitwelle 8 die Messvorrichtung 9 zur Messung der Gewebespannung angeordnet.

Dies ist eine bevorzugte Ausführungsform. In einer anderen Ausführungsform könnte vorgesehen sein, daß die Messvorrichtung 9 im Bereich zwischen der Ausbreitwelle und dem Bindepunkt 6 angeordnet ist.

In einer anderen Ausführungsform der vorliegenden Erfindung ist es vorgesehen, daß die erfindungsgemäße Messvorrichtung 9 hinter der Ausbreitwelle 8, d.h. also zwischen der Ausbreitwelle 8 und der Gewebeeinzugsvorrichtung 10 angeordnet ist.

Wesentlich ist nur, daß das Gewebe so über die Messvorrichtung 9 hinweggeführt wird, daß eine gewisse Kraft auf die Messvorrichtung 9 vom Gewebe ausgeübt wird. Die Kraft soll hierbei bevorzugt senkrecht zum Gewebeverlauf oder in etwa senkrecht zum Gewebeverlauf auf die Messvorrichtung 9 ausgeübt werden.

Die Messvorrichtung 9 setzt also eine geringfügige Umlenkung des fertiggestellten Gewebes um die Messvorrichtung 9 herum voraus, damit eine Kraft auf die kraftempfindlichen Teile der Messvorrichtung ausgeübt wird.

Damit wird also der wesentliche Vorteil erreicht, daß eine Störung im Kettfadenverlauf, d.h. also vor dem Fach 4 in Richtung zum Kettbaum 1 vermieden wird, weil in diesem Bereich die Messvorrichtung nicht angeordnet ist. Ferner wird der Vorteil erreicht, daß nur eine geringfügige Umschlingung der Messvorrichtung erforderlich ist. Das heißt also, von vornherein wird aufgrund dieser geringfügigen Umschlingung eine Störung des Gewebes verhindert.

Wesentlicher Vorteil hierbei ist, daß nicht mehr die empfindlichen Kettfäden über eine derartige Messvorrichtung geleitet werden müssen, sondern ein insich stabiles Gewebe, was daher nicht störungsanfällig ist. Ein Bruch von Kettfäden spielt keine Rolle mehr.

In der bevorzugten Form der Anordnung nach der vorliegenden Erfindung, bei der die Messvorrichtung unmittelbar in der Ausbreitwelle 8 angeordnet ist, ergibt sich der Vorteil, daß die ohnedies an der Ausbreitwelle notwendige Umlenkung nun zur Beaufschlagung der Messvorrichtung ausgenützt wird.

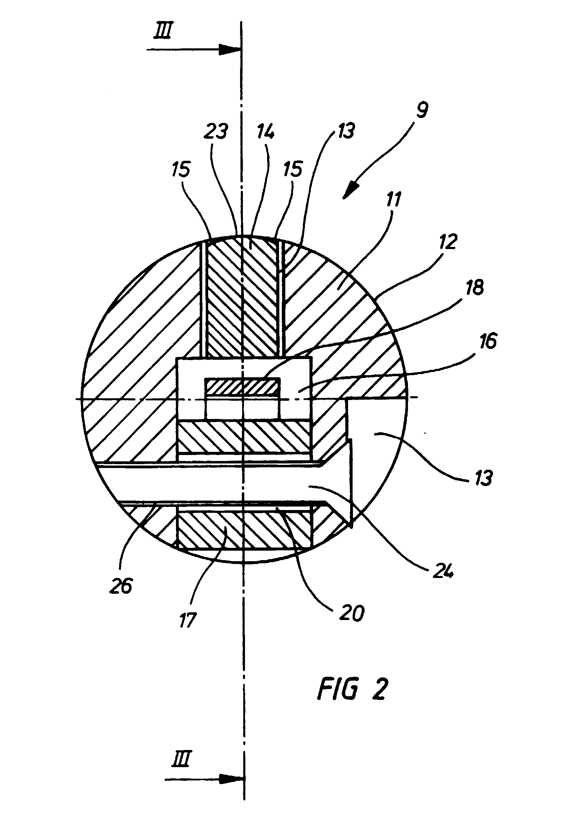

Die Fig. 2 zeigt einen Querschnitt durch eine Messvorrichtung 9 nach der Erfindung.

Hierbei ist in einem Rohr 11 mit zylinderförmiger Mantelfläche 12 eine radial verlaufende Nut 13 eingefräst.

Es versteht sich von selbst, daß die Mantelfläche 12 des Rohres 11 nicht unbedingt zylindrisch sein braucht, es können auch elliptische Mantelflächen verwendet werden oder auch Hohlrohre, in deren Mantel eine entsprechende in radialer Richtung verlaufende Nut 13 eingearbeitet ist.

Es reicht also jede gewölbte Oberfläche als Umlenkvorrichtung, mit der Maßgabe, daß in dieser Oberfläche eine radiale Nut eingearbeitet sein muß, in welcher ein Messbalken 14 angeordnet ist.

Im bevorzugten Ausführungsbeispiel nach den Fig. 2 bis 4 ist der Messbalken 14 hierbei als Profilstab ausgebildet, er besteht in seinem Material bevorzugt aus einem Aluminium, Stahl oder Kunststoffmaterial.

Wichtig ist, daß die Oberfläche 23 dieses Messbalkens 14 so bearbeitet ist, daß diese Oberfläche 23 einen geringen Reibwert hat, so daß ein unzulässiger Gewebeverschleiß hierdurch vermieden wird.

Die Kontur der Oberfläche 23 wird hierbei gemäß Fig. 4 so bearbeitet, daß eine Mittellinie 25 (Fig. 4) etwa bündig mit der Mantelfläche 12 des Rohres 2 abschließt. Dadurch wird ein ungestörter Gewebeverlauf gewährleistet, denn das Gewebe 7 läuft dann gemäß der Fig. 4 zu einem Teil auf den beiden benachbarten Auflageflächen des Rohres 2 diesseits und jenseits der Nut 13 und andererseits berührt dieses Gewebe 7 den Messbalken 14 lediglich im Bereich der in Längsrichtung verlaufenden Mittellinie 25.

Dadurch wird gewährleistet, daß eine zentrale Krafteinleitung mit definierte Richtung auf den Messbalken 14 erfolgt.

Die Kanten 15 des Profiles des Messbalkens 14 sind also unter die Mantelfläche 12 des Rohres 11 heruntergezogen, so daß diese Kanten 15 nicht mit dem Gewebe 7 in Berührung kommen.

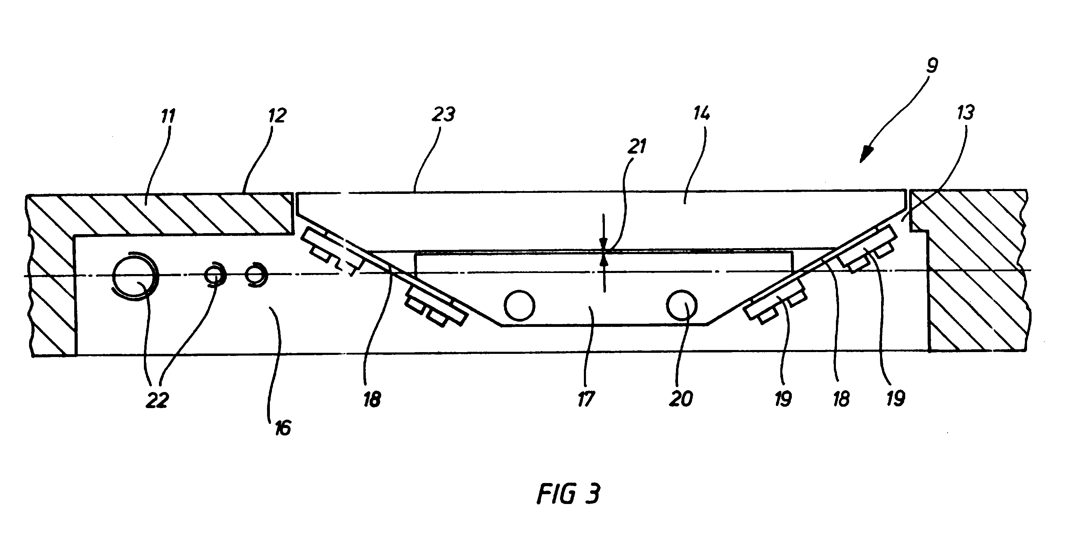

Gemäß der Fig. 3 ist der Messbalken 14 hierbei mit einem gewissen Spiel 21, welches bevorzugt etwa im Bereich von einigen hunderstel Millimeter liegt, oberhalb eines Trägers 17 angeordnet. Die Verbindung zwischen dem Messbalken 14 und dem darunter angeordneten Träger 17 erfolgt über zwei seitliche Biegebalken 18, wobei im folgenden der Einfachheit halber nur die eine Seite der Lagerung des Messbalkens 14 an dem Träger 17 beschrieben wird, weil die gegenüberliegende Seite genau identisch ausgebildet ist.

Der Biegebalken 18 besteht hierbei aus einem beliebigen Stahl, Alu oder Kunststoffmaterial, auf dem ein Dehnungsmesstreifen in Längsrichtung des Biegebalkens 18 aufgeklebt ist.

- Der Biegebalken 18 selbst wird hierbei über Spannbacken 19 einerseits mit dem Messbalken 14 und andererseits mit dem Träger 17 verbunden. Die Spannbacken weisen hierbei Schrauben auf, die in entsprechende, picht näher dargestellte Gewindebohrungen einserseits am Messbalken 14 und andererseits am Träger 17 eingreifen.

Wichtig ist, daß die Befestigungsflächen für den Biegebalken 18 an dem Messbalken 14 einerseits und an dem Träger 17 andererseits genau zueinander fluchten, so daß eine verzugsfreie Montage des Biegebalkens 18 gegeben ist.

Die jeweils auf dem Biegebalken 18 angeordneten nicht näher dargestellten Dehnungsmesstreifen sind über nicht näher dargestellte Kabelverbindungen mit einem nicht näher dargestellten Verstärker verbunden, der in entsprechenden Befestigungsbohrungen 22 im Bereich einer Ausnehmung 16 im Rohr 11 befestigt ist.

Gemäß Fig. 2 erweitert sich also die radiale Nut 13 zu einer zentralen Ausnehmung 16, in welcher der Träger 17 und die erforderlichen Befestigungsmittel angeordnet sind.

Der Träger 17 weist hierbei Bohrungen 20 auf, durch welche Schrauben 24 greifen, welche in Gewindebohrungen 26 im Rohr 11 eingeschraubt sind.

Wichtig bei der vorliegenden Erfindung ist also, daß statt der Kettspannung die Gewebespannung jenseits des Bindepunktes gemessen wird, wodurch die oben erwähnten Vorteile erreicht werden.

## Patentansprüche

1. Vorrichtung an einer Webmaschine, zur Messung der Kettspannung, bei der entsprechend der Spannung der Kettfäden (2) eine Meßeinrichtung (9) mit Druck oder Kraft beaufschlagbar ist, die Meßeinrichtung (9) im Bereich des fertigen Gewebes (7) nach dem Bindepunkt (6) des Gewebes (7) angeordnet ist, wobei die zur Kettfadenspannung proportionale Gewebespannung nach dem Bindepunkt meßbar ist, wobei ferner die Meßeinrichtung (9) aus einem etwa zylinderförmigen Rohr (11) besteht, in dessen Mantelfläche (12) eine längliche Nut (13) eingearbeitet und ein Meßbalken (14) mit Dehnungsmeßstreifen angeordnet ist, der mit seiner Oberfläche etwa bündig mit der Mantelfläche (12) des Rohres (11) abschließt, dadurch gekennzeichnet, daß der Meßbalken (14) mit geringem Spiel (21) oberhalb eines Trägers (17) angeordnet ist und mit dem Träger (17) über seitliche Biegebalken (18), an denen Dehnungsmeßstreifen aufgeklebt sind, in Verbindung steht.

2. Vorrichtung nach Anspruch 1, **dadurch gekennzeichnet**, daß die Lagerkräfte auf eine im Bereich jenseits des Bindepunktes (6) des Gewebes (7) angeordnete Welle gemessen werden, die zur Kettfadenspannung proportional sind.

3. Vorrichtung nach Anspruch 1, **dadurch gekennzeichnet**, daß die Meßeinrichtung (9) fest am Webstuhl in der Ausbreitwelle (8) für das Gewebe (7) angeordnet ist.

4. Vorrichtung nach Anspruch 1, **dadurch gekennzeichnet**, daß die Meßeinrichtung (9) zwischen der Ausbreitwelle (8) und der Gewebeeinzugsvorrichtung (10) angeordnet ist.

5. Vorrichtung nach Anspruch 1, **dadurch gekennzeichnet**, daß die Kanten (15) des Meßbalkens (14) am Rande der Nut (13) nach unten gezogen bzw. versenkt ausgebildet sind.

6. Vorrichtung nach Anspruch 1, **dadurch gekennzeichnet**, daß die Nut (13) im zylindrischen Rohr (11) nach Art einer Erweiterung eine Ausnehmung (16) aufweist, in welche ein Träger (17) für den Meßbalken (14) sowie ein Verstärker und sonstige zusätzliche Einrichtungen sowie Befestigungsmittel angeordnet sind.

7. Vorrichtung nach einem der Ansprüche 4 -6, **dadurch gekennzeichnet,** daß die Meßeinrichtung (9) mit dem zylindrischen Rohr (11) bzw. dem Meßbalken (14) als Druckaufnehmer oder als induktiver bzw. kapazitiver oder optischer Wegmesser ausgebildet ist.

## Claims

1. A device on a loom for the measurement of the warp tension, in which a measurement device (9) is able to be acted upon by pressure or force corresponding to the tension of the warp threads (2), the measurement device (9) is arranged in the region of the finished fabric (7) after the binding point (6) of the fabric (7), wherein the fabric tension, which is proportional to the warp thread tension, is able to be measured after the binding point, and wherein, furthermore, the measuring device (9) consists of an approximately cylindrical tube (11), in the outer surface (12) of which an elongated groove is worked and a measurement beam (14) with wire strain gauge is arranged, which terminates with its surface approximately flush with the outer surface (12) of the tube (11), characterised in that the measurement beam (14) is disposed with a small play (21) above a carrier (17) and is connected with the carrier (17) via lateral bending beams (18), on which wire strain gauges are glued.

2. A device according to Claim 1,
characterised in that the bearing forces are measured on a beam arranged in the region of the other side of the binding point (6) of the fabric (7), which forces are proportional to the warp thread tension.

3. A device according to Claim 1,
characterised in that the measurement device (9) is arranged fixedly on the loom in the spreading shaft (8) for the fabric (7).

4. A device according to Claim 1,
characterised in that the measurement device (9) is arranged between the spreading shaft (8) and the fabric draw-in device (10).

5. A device according to Claim 1,
characterised in that the corners (15) of the measurement beam (14) are constructed so as to be drawn downward or countersunk on the edge of the groove (13).

6. A device according to Claim 1,
characterised in that the groove (13) in the cylindrical tube (11) has a recess (16) in the manner of a widening, into which a carrier (17) for the measurement beam (14) and also a strengthener and other additional arrangements and also fastening means are arranged.

7. A device according to any one of Claims 4 to 6, characterised in that the measurement device (9) is constructed with the cylindrical tube (11) or with the measurement beam (14) as pressure receiver or as an inductive or capacitive or optical position sensor.

## Revendications

1. Dispositif équipant une machine de tissage pour mesurer la tension de la chaîne, dans lequel un dispositif de mesure (9) est apte à être sollicité par une pression ou par une force en fonction de la tension des fils de chaîne (2), le dispositif de mesure (9) est disposé dans la zone du tissu fini (7), après le point de liage (6) de celui-ci, la tension du tissu, proportionnelle à la tension des fils de chaîne, étant mesurable après ce point de liage, le dispositif de mesure (9) se composant en outre d'un tube (11) sensiblement cylindrique, dans la surface latérale (12) duquel est réalisée une rainure oblongue (13) et est disposée une barre de mesure (14), qui comporte des jauges d'allongement et dont la surface forme sensiblement une surface plane avec la surface latérale (12) du tube (11), dispositif caractérisé en ce que la barre de mesure (14) est disposée avec un faible jeu (21) au-dessus d'un support (17) et est reliée à ce support (17) par l'intermédiaire de barres latérales de flexion (18), sur lesquelles sont collées des jauges d'allongement.

2. Dispositif selon la revendication 1, caractérisé en ce que les forces d'appui sur un arbre,disposé dans la zone située au-delà du point de liage (6) du tissu (7), sont mesurées, lesquelles forces sont proportionnelles à la tension des fils de chaîne.

3. Dispositif selon la revendication 1, caractérisé en ce que le dispositif de mesure (9) est disposé de façon fixe sur le métier à tisser, dans l'arbre élargisseur (8) prévu pour le tissu (7).

4. Dispositif selon la revendication 1, caractérisé en ce que le dispositif de mesure (9) est disposé entre l'arbre (8) et le dispositif (10) de rétrécissement de tissu.

5. Dispositif selon la revendication 1, caractérisé en ce que les arêtes (15) de la barre de mesure (14) sont dirigées vers le bas, ou enfoncées, au bord de la rainure (13).

6. Dispositif selon la revendication 1, caractérisé en ce que la rainure (13) prévue dans le tube cylindrique (11) présente, sous la forme d'un élargissement, une cavité (16) dans laquelle sont disposés un support (17) pour la barre de mesure (14), un amplificateur et d'autres dispositifs supplémentaires et moyens de fixation.

7. Dispositif selon l'une des revendications 4 à 6, caractérisé en ce que le dispositif de mesure (9), comprenant le tube cylindrique (11) et la barre de mesure (14), est conçu comme un capteur de pression ou comme un dispositif de mesure de déplacement inductif, capacitif ou optique.
